Europäisches Patentamt

European Patent Office

Office européen des brevets

(11) Veröffentlichungsnummer: **0 378 986**

**A1**

(12) **EUROPÄISCHE PATENTANMELDUNG**

(21) Anmeldenummer: 89890015.4

(22) Anmeldetag: 20.01.89

(51) Int. Cl.⁵: **E01D 19/04, E04B 1/36, F16C 33/20**

(43) Veröffentlichungstag der Anmeldung:
25.07.90 Patentblatt 90/30

(84) Benannte Vertragsstaaten:
AT BE CH DE ES FR GB GR IT LI LU NL SE

(71) Anmelder: **BÖHLER Gesellschaft m.b.H.**
**Elisabethstrasse 12**
**A-1010 Wien(AT)**

Anmelder: **Schwäbische Hüttenwerke**
**Gesellschaft mit beschränkter Haftung**
**Wilhelmstrasse 67 Postfach 3280**
**D-7080 Aalen-Wasseralfingen(DE)**

(72) Erfinder: **Stamberger, Johann, Dipl.-Ing.**
**Rainweg 124, Süd**
**A-8605 Kapfenberg(AT)**
Erfinder: **Pohl, Dieter, Prof.Dr.**
**Johann Sebastian Bach Strasse 17**
**D-7080 Aalen(DE)**

(54) **Lager.**

(57) Die Erfindung betrifft Lager, die zumindest teilweise aus Manganstahl (2,3) bestehen. Die einzelnen Lagerteile, so die Lagerplatten(1), Lagerkörper, Lagerrollen (8) uws., bestehen aus massivem Manganstahl oder sind mit einer Panzerung bzw. einem Arbeitskörper (3) aus Manganstahl versehen.

Fig. 1

EP 0 378 986 A1

## Lager

Die Erfindung betrifft Lager zur Abstützung von Bauwerken, insbesondere Brücken, z.B. Rollen- ,Topf-,Kalotten-,Kugel-, insbesondere 4-Kugellager, Kipplager od. dgl. Derartige Lager weisen eine Anzahl von gegeneinander beweglichen Bauteilen auf, die unter großer Belastung stehen. Die Bauteile rollen oder wälzen gegeneinander und unterliegen stärkster Beanspruchung. Vor allem werden derartige Lager für Bauwerke eingesetzt, wenn die Bauwerke eine Relativbewegung, insbesondere Relativverschiebung, gegen ihre Pfeiler, Widerlager oder Fundamente, d.h. ortsfeste Lagerstellen durchführen.

Lager aus Baustahl sind auf Grund der Werkstoffeigenschaften bzw. der hohen Flächenpressung im Kontaktbereich der sogenannten Arbeitsfläche, z.B. Lagerplatten/Rollen, nur begrenzt belastbar. Es wurden bereits Lager erstellt, bei welchen die Rollen und Lagerplatten im Wälzbereich mittels auftragsgeschweißter Hartstahlschichten versehen wurden, um die zulässige Hertzpressung zu steigern. Eine weitere Steigerung der Belastbarkeit wurde erzielt, indem die Rollen bzw. der Wälzbereich der Lagerplatten aus legiertem Edelstahl hergestellt wurden. Schließlich zeigen jedoch auch derartige Lager Schäden in Form von Rissen, die zur Zerstörung der Wälzflächen und/oder Rollen führen. Insbesondere starke Temperaturschwankungen und auf Grund der Temperaturempfindlichkeit auftretende Alterungserscheinungen machen derartige Lager nach einer gewissen Zeit funktionsunfähig. Weiters verspröden die bisher verwendeten Werkstoffe bzw. Legierungen bei tiefen Temperaturen, wodurch es zu verformungslosen Brüchen der Lager kommen kann. Ferner besitzen diese Werkstücke eine auffallende Kantenpressungsempfindlichkeit, sodaß auch dadurch Risse und infolge dieser Risse und Lagerbrüche Fundament -oder Pfeilerverlagerungen auftreten können.

Ziel der Erfindung ist es, Lager auszubilden , die höchsten Pressungen standhalten können und deren Belastbarkeit, insbesondere auch bei Temperaturschwankungen und bei tiefen Temperaturen, den auftretenden Anforderungen gerecht werden. Dieses Ziel wird bei einem Lager der eingangs genannten Art erfindungsgemäß dadurch erreicht, daß die eine Relativbewegung zueinander ausführenden Lagerteile zumindest im Bereich ihrer gemeinsamen Arbeitsflächen, insbesondere Rollbzw. Abrollflächen , eine Arbeitsschicht bzw. einen Arbeitskörper aus Manganstahl aufweisen oder zumindest im Lagerbereich zur Gänze aus Manganstahl gebildet sind. Vorteilhafterweise ist vorgesehen, daß die Arbeitsschichten bzw-körper aus Manganstahl von einem Grundkörper abgestützt sind bzw. mit diesem als Verbundkörper ausgebildet sind, der aus hochfestem vergütbarem Baustahl, Vergütungsstahl od. dgl. besteht. Durch den Einsatz von Manganstahl zumindest im Arbeitsbereich wird eine Herstellung dieser hochfesten Lagerteile möglich.

Ein Lagermit mindestens einem im Wälzbereich zylindrische oder teilzylindrische Form aufweisenden Rollenkörper, welcher zwischen parallelen Arbeitsflächen mindestens einer oberen und einer unteren Lagerplatte innerhalb einer begrenzenden Wegstrecke abrollt, welches Rollenlager gegebenenfalls Führungselemente zur Aufnahme von quer zur Bewegungsrichtung wirkenden Kräften besitzt ist dadurch gekennzeichndt, daß zumindest im Wälzbereich die Lagerplatte(n) und/oder der/die Rollenkörper aus einem aus verschiedenen Legierungen bzw. Werkstoffen bestehenden Verbundkörper gebildet ist/sind, der einen Grundkörper umfaßt, dessen Werkstoff eine Zähigkeit von mindestens 30 Joule ( Probe DVM geprüft bei 20 °C) und eine Streckgrenze von mindestens 325 N/mm², insbesondere mindestens 600 N/mm², aufweist und einen Arbeitskörper bzw. eine Arbeitsschicht aus Manganstahl umfaßt, der einen Mangangehalt von mindestens 6 Gew.-% aufweist. Diese Lagerausführungen werden allen Anforderungen gerecht. Vorteilhafterweise kann der Grundkörper bzw. Rollenkern aus höherfestem Baustahl mit einer Streckgrenze z.B.zwischen 325 bis 885 Newton je mm², bestehen. Das Mantelmaterial besteht aus einem Hartmanganstahl, der dadurch gekennzeichnet ist,daß der Manganstahl im wesentlichen Gehalte im Gew.-% von

C = 0,5 bis 2,5, vorzugsweise 0,8 b is 2,0, insbesondere 1bis 1,2,

Si = 0,1 bis 2,0, vorzugsweise 0,2 bis 1,0

Mn = 6,0 bis 25,0,vorzugsweise 10,0 bis 20,0, insbesondere 10 bis 12,

Cr 10,0 vorzugsweise bis 8,0, insbesondere o,5bis 5,0

Mo bis 2,8 ,vorzugsweise bis 0,8

Ni bis 10,0 vorzugsweise bis 5,0, insbesondere 0,4 bis 3,0

N = 0,01 bis 1,4,vorzugsweise o,02 bis 0,4,
Rest erschmelzungsbedingte Verunreinigungen und Eisen aufweist.

Besonders vorteilhaft ist es, wenn Rollen verwendet werden, die entweder zur Gänze aus Manganstahl bestehen oder mit diesem gepanzert sind. Die Lagerplatten sind in die Tragkonstruktion entweder eingelegt oder mit dieser verbunden und bestehen aus massivem Manganstahl oder aus einem mit Manganstahl gepanzerten Grundkörper. Der eingesetzte Manganstahl erhöht im Zuge seiner Belastung seine Härte, sodaß auf ihn einwirkende Pressungen seine Widerstandskraft verbessern. Eine Härtesteigerung der Oberfläche der aus Manganstahl be stehenden Platten bzw. Lagerrollen wird durch eine Kaltverfestigung, z.B. durch Rollieren, erreicht. Es kann vorgesehen sein, daß zumindest eine oberflächennahe Zone der aus Manganstahl bestehenden Arbeitsschicht im Wälzbereich kalt verfestigt ist und/oder verformungsmartenistische Gefügeanteile aufweist und gegebenenfalls zur Erreichung der Enddimension spanabhebend bearbeitet, beispielsweise geschliffen ist. Bei Verbundlagerteilen ist es sinnvoll, wenn man bei einer Vergütungsbehandlung den Verbundteil von der Härtetemperatur des Kernwerkstoffes abschreckt und somit eine Überhitzung des Kernes verhindert. Dadurch kann eine weitere Erhöhung der zulässigen Pressung des gepanzerten Rollenkörpers erreicht werden.

In der Praxis hat es sich gezeigt, daß es besonders vorteilhaft ist, wenn der Grundkörper und die Arbeitsschicht miteinander metallisch verbunden sind.

Eine alternative Ausführungsform der Erfindung sieht vor, daß zumindest eine der Lagerplatten aus einem Grundkörper und einem mit diesem im wesentlichen formschlüssig verbundenen Arbeitskörper besteht, wobei die Außen-bzw. Arbeitsschicht des Rollenkörpers und der Arbeitskörper der Lagerplatte aus Manganstahl bestehen. Insbesondere dabei ist es zweckmäßig, wenn zumindest die oberflächennahe Zoren des Arbeitskörpers und/oder der Außenschicht des Rollenkörpers im Wälzbereich eine Kalt-verfestigung des Manganstahles und/oder verformungsmartensitische Gefügeanteile bei einer Werkstoffhärte von mindestens 5oo HV, insbesondere von mindestens 550 HV, aufweisen. Es ist auch möglich, um eine gute Verbindung zwischen dem Manganstahl und dem Grundkörper zu erreichen, daß die Lagerteile, insbesondere die Arbeitsschicht bzw. die Arbeitskörper bzw. die Lagerplatten und/oder die Rollenkörper, aus pulvermetallurgisch hergestelltem Manganstahl bestehen, wobei die Arbeitsschichten gegebenenfalls durch HIPen oder Warmumformen mit dem Grundkörper verbunden sind. Dazu wird der gereinigte Grundkörper bzw. Kern in ein Blechrohr gelegt und mit dem Pulver aus Manganstahl umgeben; das Rohr wird daraufhin evakuiert und verschweißt und durch heißisostatisches Pressen oder Schmieden bzw. Walzen querschnittsverringert, sodaß ein metallischer Verbund zwischen dem Grundkörper und der Panzerung aus Mangangstahl erreicht wird.

Um Karbidausscheidungen bei der Herstellung einer metallischen Bindung zu vermeiden, ist es zweckmäßig, eine Anlaßbehandlung bei Temperaturen, die höher als 400° C sind, zu vermeiden, da derartige Temperaturen Karbidausscheidungen an der Grenzfläche zwischen dem Manganstahl und dem Grundkörper aus Vergütungsstahl bewirken, so daß diese Zone versprödet. Wärmebehandlungen sind allerdings bei mechanisch festgehaltenen Platten oder bei durch Sprengplattieren verbundenem Grundkörper und Arbeitskörper nicht erforderlich.

Erfindungsgemäß ist ein Verfahren zur Herstellung von aus Verbundwerkstoff gebildeten Lagerteilen zur Abstützung von Bauwerken, z.B. von Brükken, vorzugsweise Rollenlagern bzw. Rollenkörpern und/oder Lagerplatten, bestehend aus einem Grundkörper und einer Arbeitsschicht dadurch gekennzeichnet, daß eine Härte-bzw. Vergütungsbehandlung zur Einstellung hoher Zähigkeit und hoher Festigkeit des Werkstoffes des gegebenenfalls aus Vergütungsstahl bestehenden Grundkörpers durchgeführt wird, daß der Grundkörper mit einer aus Manganstahl mit einem Mangangehalt von mindestens 6 Gew.-% bestehenden Arbeitsschicht verbunden wird, und daß die Arbeitsschicht, insbesondere deren oberflächennahe Zone, im Wälzbereich durch Kaltbearbeitung verfestigt und auf eine Härte von min destens 500 HV ,insbesondere mindestens 550 HV, gebracht wird und gegebenenfalls spanabhebend bearbeitet , beispielsweise geschliffen, wird. Durch diese Vorgangsweise ist es möglich, Lagerteile herzustellen, die ausgesprochen verschleißfest und hoch belastbar sind. Der Manganstahl bietet eine ausgesprochen hohe Verfestigungsfähigkeit, gleichzeitig hohe Zähigkeit und insbesondere auch eine hohe Zähigkeit bei tiefen Temperaturen ,welche diese aus Manganstahl hergestellten Lagerteile den bisher bekannten Lagerteilen überlegen macht; dies ist auch mit der Verschiebung der Kerbschlagzähigkeitsübergangstemperatur auf Temperaturen von -40° C oder tiefer zu erklären.

Vorteilhaft wird beim erfindungsgemäßen Verfahren derart vorgegangen, daß zur Ausbildung eines metallischen Verbundes bzw. einer metallischen Verbindung auf den Grundkörper des Rollenkörpers oder der Lagerplatte, die gegebenenfalls aus Vergütungsstahl od. dgl. bestehen, die Arbeitsschicht aus Manganstahl, insbesondere durch Sprengplattieren, aufgebracht wird.

Die erfindungsgemäße Verwendung von Manganstahl für die Herstellung von Lagern für Bauwerke, vorzugsweise Brücken, bzw. für die Herstellung von Lagerteilen, von auf Lagergrundkörper aufgebrachten Arbeitskörper bzw. Arbeitsschichten, von von Grundkörpern getragenen massiven Arbeitskörpern b zw. Platten oder von massiven Lagerrollen bzw. massiven Rollen-bzw. Gleitkörpern, ermöglicht den Einsatz von widerstandsfähigen und hochfesten Bauteilen, die ihre Eigenschaften auch bei Temperaturschwankungen unverändert beibehalten.

Im folgenden wird die Erfindung anhand der Zeichnung näher beschrieben:

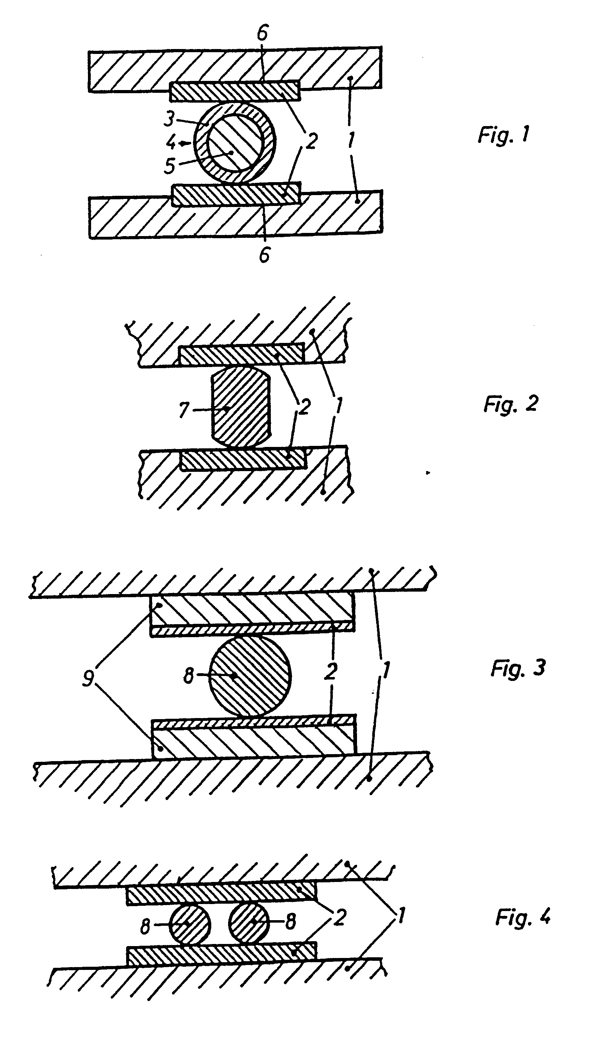

In Fig. 1 ist ein Rollenlager dargestellt, bei dem in Grundkörpern bzw. Basisplatten 1 Arbeitskörper 2 angeordnet sind, zwischen denen eine mit einem Arbeitskörper 3 und einer Arbeitsschicht gepanzerte Rolle 4 angeordnet ist, die einen Grundkörper 5 besitzt. Die Grundkörper bzw. die Basisplatten bestehen aus üblichen Stählen für Tragkonstruktionen. In Ausnehmungen 6 dieser Basisplatten 1 sind die Arbeitskörper 2 aus Manganstahl eingefügt, zwischen denen sich die mit der Arbeitsschicht 3 aus Manganstahl gepanzerte Rolle 4 bewegt. Der Grundkörper 5 der Rolle 4 besteht aus hochfestem Baustahl oder Vergütungsstahl.

Fig. 2 zeigt eine Lageranordnung, bei der zwischen zwei Grundkörpern bzw. Basisplatten 1 ein massiver, aus Manganstahl bestehender Wälzkörper 7 angeordnet ist, der sich zwischen zwei Arbeitskörpern 2 aus massivem Manganstahl bewegt.

Fig.3 zeigt eine Ausführungsform, bei der auf den Bauwerkträger 1 plattenförmige Grundkörper 9 befestigt sind, welche Arbeitskörper 2 aus Manganstahl tragen. Die Rolle 8 besteht aus massivem Manganstahl, die Grundplatten 9 aus hochfestem Baustahl bzw. Vergütungsstahl.

In Fig. 4 ist ein Rollenlager mit 2 aus massivem Manganstahl gebildeten Rollen 8 dargestellt, wobei das Bauwerk bzw. die Bauwerkträger 1 auf Lagerplatten 2, die ebenfalls aus massivem Manganstahl bestehen, abgestützt sind.

## Ansprüche

1. Lager zur Abstützung von Bauwerken, insbesondere Brücken, z.B. Rollen-, Topf-,Kalotten-, Kugel, insbesondere 4-Kugellager, Kipplager oder dgl., dadurch gekennzeichnet, daß die eine Relativbewegung zueinander ausführenden Lagerteile zumindest im Bereich ihrer gemeinsamen Arbeitsflächen, insbesondere Roll-bzw. Abrollflächen, eine Arbeitsschicht bzw. einen Arbeitskörper aus Manganstahl aufweisen oder zumindest im Lagerbereich zur Gänze aus Manganstahl gebildet sind.

2. Lager nach Anspruch 1, dadurch gekennzeichnet, daß die Arbeitsschichten-bzw. körper aus Manganstahl von einem Grundkörper abgestützt sind bzw. mit diesem als Verbund -körper ausgebildet sind, der aus hochfestem vergütbarem Baustahl, Vergütungsstahl od. dgl. besteht.

3. Lager nach Anspruch 1 oder 2, mit mindestens einem im Wälzbereich zylindrische oder teilzylindrische Form aufweisenden Rollenkörper, welcher zwischen parallelen Arbeitsflächen mindestens einer oberen und einer unteren Lagerplatte innerhalb einer begrenzenden Wegstrecke abrollt, welches Rollenlager gegebenenfalls Führungselemente zur Aufnahme von quer zur Bewegungsrichtung wirkenden Kräften besitzt, dadurch gekennzeichnet, daß zumindest im Wälzbereich die Lagerplatte(n) und/oder der/die Rollenkörper aus einem aus verschiedenen Legierungen bzw. Werkstoffen bestehenden Verbundkörper gebildet ist/sind, der einen Grundkörper umfaßt, dessen Werkstoff bei einer Zähigkeit von mindestens 3o Joule ( Probe DVM geprüft bei 2o° C) und eine Wegstrecke von mindestens 325 N/mm² insbesondere mindestens 600 N/mm², aufweist und einen Arbeitskörper bzw. eine Arbeitsschicht aus Manganstahl umfaßt, der einen Mangangehalt von mindestens 6 Gew.-% aufweist.

4. Lager nach einem der Ansprüche 1 bis 3, dadurch gekennzeichnet, daß der Grundkörper und der Arbeitskörper bzw. die Arbeitsschicht miteinander metallisch verbunden sind.

5. Lager nach einem der Ansprüche 1 bis 4, dadurch gekennzeichnet, daß zumindest eine oberflächennahme Zone der Arbeitsschicht im Wälzbereich kalt verfestigt ist und /oder verformungsmartensitisch Gefügeanteile aufweist und gegebenenfalls zur Erreichung der Enddimension spanabhebend bearbeitet, beispielsweise geschliffen, ist.

6. Lager nach einem der Ansprüche 1 bis 5, dadurch gekennzeichnet, daß zumindest eine der Lagerplatten aus einem Grundkörper und einem mit diesem im wesentlichen formschlüssig verbundenen Arbeitskörper besteht, wobei die Außenbzw. Arbeitsschicht des Rollenkörpers und der Arbeitskörper der Lagerplatte aus Manganstahl bestehen.

7. Lager nach einem der Ansprüche 1 bis 6, dadurch gekennzeichnet, daß zumindest die oberflächennahen Zonen des Arbeitskörpers der Lagerplatte(n) und/oder der Außen-bzw. Arbeitsschicht des Rollenkörpers im Wälzbereich eine Kaltverfestigung des Manganstahles und/oder verformungsmartensitische Gefügeanteile bei einer Werkstoffhärte von mindestens 500 HV, insbesondere von mindestens 55o HV, aufweisen.

8. Lager nach einem der Ansprüche 1 bis 7, dadurch gekennzeichnet, daß der Manganstahl im wesentlichen Gehalte in Gew.-% von
C = 0,5 bis 2,5 , vorzugsweise o,8 bis 2,0,insbes. 1 bis 1,2,
Si = 0,1 bis 2,0 , vorzugsweise 0,2 bis 1,0,
Mn = 6,0 bis 25,0 , vorzugsweise 10,0 bis 20,0,insbes.10 bis 12
Cr = bis 10,0 , vorzugsweise bis 8,0,insbes.o,5bis 5,0
Mo bis 2,8 , vorzugsweise bis 0,8
Ni bis 10,0 , vorzugsweise bis 5,0,insbes. 0,4bis 3,0
N = 0,01 bis 1,4 , vorzugsweise 0,02 bis 0,4
Rest erschmelzungsbedingte Verunreinigungen und Eisen aufweist.

9. Lager nach einem der Ansprüche 1 bis 8, dadurch gekennzeichnet, daß die Lagerteile, insbesondere die Arbeitsschicht bzw. die Arbeitskörper bzw. die Lagerplatten und/oder die Rollenkörper, aus pulvermetallurgisch hergestelltem Manganstahl bestehen, wobei die Arbeitskörper bzw. die Arbeitsschichten gegebenenfalls durch Hipen oder Warmumformen mit dem Grundkörper verbunden sind.

10. Lager nach einem der Ansprüche 1 bis 9, dadurch gekennzeichnet, daß zumindest die oberflächennahe Zone im Wälzbereich der(s) aus Manganstahl bestehenden Arbeitsschicht bzw. Arbeitskörpers durch Kaltverformen wie z.B. Hämmern, Walzen, Rollieren, Drücken, durch Sprengung,Kugelstrahle od. dgl. verfestigt ist.

11. Verfahren zur Herstellung von aus Verbundstahl gebildeten Lagerteilen zur Abstützung von Bauwerken, z.B. Brücken, insbesondere nach einem der Ansprüche 1 bis 10, vorzugsweise Rollenlagern bzw. Rollenkörpern und/oder Lagerplatten, bestehend aus einem Grundkörper und einem Arbeitskörper, dadurch gekennzeichnet, daß eine Härte-bzw. Vergütungsbehandlung zur Einstellung hoher Zähigkeit und hoher Festigkeit des Werkstoffes des gegebenenfalls aus Vergütungsstahl bestehenden Grundkörpers durchgeführt wird, daß der Grundkörper mit einem aus Manganstahl mit einem Mangangehalt von mindestens 6 Gew.-% bestehende Arbeitskörper verbunden wird, und daß der Arbeitskörper, insbesondere dessen oberflächennahe Zone, im Wälzbereich durch Kaltbearbeitung verfestigt und auf eine Härte von mindestens 5oo HV, insbesondere mindestens 550 HV, gebracht und gegebenenfalls spanabhebend bearbeitet, beispielsweise geschliffen, wird.

12. Verfahren nach Anspruch 11, dadurch gekennzeichnet, daß eine Kaltbearbeitung zur Verfestigung eines aus Manganstahl gebildeten Arbeitskörpers oder dessen oberflächennaher Zone zumindest jedoch ein letzter Bearbeitungsschritt durch eine Präzisionsformgebung, beispielsweise durch Planwalzen, Kaliberwalzen, Ziehen, Drücken od. dgl. auf eine geforderte , im wesentlichen der Endabmessung der Lagerplatte oder des Rollenkörpers entsprechende Abmessung durchgeführt wird.

13. Verfahren zur Abstützung von Bauwerken, insbesondere von Brücken, insbesondere nach einem der Ansprüche 1 bis 12 zur Herstellung von aus Verbundwerkstoff gebildeten Lagerteilen, insbesondere Rollenkörpern und Lagerplatten für Rollenlager, dadurch gekennzeichnet, daß zur Ausbildung eines metallischen Verbundes bzw. einer metallischen Verbindung auf den Grundkörper des Rollenkörpers oder der Lagerplatte, die gegebenenfalls aus Vergütungsstahl od. dgl. bestehen, der Arbeitskörper bzw. die Arbeitsschicht aus Manganstahl, insbesondere durch Sprengplattieren, aufgebracht wird.

14. Verfahren zur Herstellung von Lagerteilen zur Abstützung von Bauwerken, z.B. Brücken, insbesondere nach einem der Ansprüche 1 bis 10, vorzugsweise von Rollenkörpern, Lagerplatten od. dgl., dadurch gekennzeichnet, daß die Lagerteile aus massivem Manganstahl, z.B. durch Gießen, Schmieden, Sintern, HIPen, Pressen od. dgl. hergestellt werden und daß die Arbeitsschicht, insbesondere deren oberflächennahe Zone, im Wälzbereich durch Kaltbearbeitung verfestigt und auf eine Härte von mindestens 500 HV, insbesondere mindestens 550 HV, gebracht und gegebenenfalls spanabhebend bearbeitet, beispielsweise geschliffen, wird.

15. Verwendung von Manganstahl für die Herstellung von Lagern für Bauwerke, vorzugsweise Brücken, insbesondere nach einem der Ansprüche 1 bis 10, bzw. für die Herstellung von Lagerteilen, von auf Lagergrundkörper aufgebrachten Arbeitskörpern bzw. Arbeitsschichten, von von Grundkörpern getragenen massiven Arbeitskörpern bzw.platten oder von massiven Lagerrollen bzw. massiven Rollen-bzw Gleitkörpern

Fig. 1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 293 648 (SCHWÄBISCHE H. WERKE)<br>* Insgesamt *<br>--- | 1 | E 01 D 19/04<br>E 04 B 1/36<br>F 16 C 33/20 |
| A | DE-B-1 078 155 (MASCHINENFABRIK ESSLINGEN)<br>* Insgesamt *<br>--- | 1 | |
| A | US-A-3 734 582 (BEAUCHET)<br>--- | | |
| A | CH-A- 389 331 (STRAUMANN AG)<br>----- | | |

RECHERCHIERTE SACHGEBIETE (Int. Cl.5)

E 01 D
F 16 C

Der vorliegende Recherchenbericht wurde für alle Patentansprüche erstellt

| Recherchenort | Abschlußdatum der Recherche | Prüfer |
|---|---|---|
| DEN HAAG | 06-09-1989 | DIJKSTRA G. |